# EUROPÄISCHE PATENTSCHRIFT

(11) **EP 0 407 753 B1**
(45) Veröffentlichungstag und Bekanntmachung des Hinweises auf die Patenterteilung: **08.03.1995**
(21) Anmeldenummer: 90111267.2
(22) Anmeldetag: 15.06.1990
(51) Int. Cl.: H04N 9/79

(54) **Videorecorder zur Aufzeichnung von normalzeiligen Videosignalen und Videosignalen mit erhöhter Zeilenzahl**
Video recorder for recording video signals with a normal number of lines and video signals with an increased number of lines
Enregistreur vidéo pour enregistrer des signaux vidéo à nombre normal de lignes et des signaux vidéo à nombre de lignes plus élevé

(30) Priorität: 08.07.1989 DE 3922525
(43) Veröffentlichungstag der Anmeldung: 16.01.1991
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Richter, Manfred, Grundig E.M.V., Elektro-Mechan., Kurgartenstr. 37, D-8510 Fürth/Bay (DE)

(56) Entgegenhaltungen:
- US-A- 4 805 034
- FUNKSCHAU. no. 25, 04 Dezember 1987, MUNCHEN DE Seiten 42 - 46; "Losgelöst von Normen"

## Beschreibung

Die Erfindung betrifft einen Videorecorder zur Aufzeichnung von Videosignalen mit den im Oberbegriff des Anspruchs 1 angegebenen Merkmalen.

Aus der Zeitschrift "Funkschau" 1987, Heft 25, S. 42-46, dem Tagungsband der 13. Jahrestagung der FKTG vom 16.-20. Mai 1988 und der EP-A2-0 243 739 ist ein Videorecorder zur transparenten Aufzeichnung von Videosignalen bekannt. Bei diesem Videorecorder erfolgt die Aufzeichnung ohne vorherige Decodierung des ankommenden Signals und damit ohne eine Zerlegung des Signals in seine Einzelkomponenten. Das ankommende Signal wird zunächst analog/digitalgewandelt. Die aufeinanderfolgenden Zeilen des digitalen Signals werden auf zwei Aufzeichnungskanäle verteilt. In jedem der Aufzeichnungskanäle erfolgt eine Zeitexpansion, die Eintastung eines Synchronsignals, eine Digital/Analog-Wandlung, eine Vorverzerrung (Preemphase) und eine Frequenzmodulation. Das frequenzmodulierte Signal wird schließlich mittels einer Magnetkopfeinheit aufgezeichnet.

Ausgehend von diesem Stand der Technik liegt der Erfindung die Aufgabe zugrunde, einen Videorecorder mit den im Oberbegriff des Anspruchs 1 angegebenen Merkmalen mit möglichst wenig Aufwand derart auszugestalten, daß er sowohl zur Aufzeichnung eines Videosignals mit einer ersten Zeilenzahl als auch zur Aufzeichnung eines Videosignals mit erhöhter Zeilenzahl geeignet ist.

Diese Aufgabe wird bei einem Videorecorder mit den im Oberbegriff des Anspruchs 1 angegebenen Merkmalen durch die im kennzeichnenden Teil des Anspruchs 1 angegebenen Merkmale gelöst. Vorteilhafte Ausgestaltungen der Erfindung ergeben sich aus den Ansprüchen 2 und 3.

Die Vorteile der Erfindung bestehen insbesondere darin, daß sowohl für das normalzeilige als auch für das Videosignal mit erhöhter Zeilenzahl dasselbe Aufzeichnungsschema verwendet wird und deshalb keinerlei Änderungen am Band- und Kopfservosystem des Videorecorders durchgeführt werden müssen.

Ein weiterer Vorteil der Erfindung besteht darin, daß bei der Aufzeichnung eines Signals mit erhöhter Zeilenzahl nicht in jede Zeile ein (zusätzliches) Synchronsignal eingefügt werden muß.

Weitere vorteilhafte Eigenschaften der Erfindung ergeben sich aus der Erläuterung von Ausführungsbeispielen anhand der Figuren. Es zeigt
- Figur 1 ein vereinfachtes Blockschaltbild zur Erläuterung der aufzeichnungsseitigen Signalverarbeitung;
- Figur 2a ein erstes Ausführungsbeispiel zur Ausgestaltung des Taktgenerators 14 von Figur 1;
- Figur 2b ein zweites Ausführungsbeispiel zur Ausgestaltung des Taktgenerators 14 von Figur 1;
- Figur 3a bis 3c eine schematische Darstellung eines Ausführungsbeispiels für die Aufteilung eines normalzeiligen Eingangssignals auf die Aufzeichnungskanäle; und
- Figur 3d bis 3f eine schematische Darstellung eines Ausführungsbeispiels für die Aufteilung eines Eingangssignals mit erhöhter Zeilenzahl auf die Aufzeichnungskanäle.

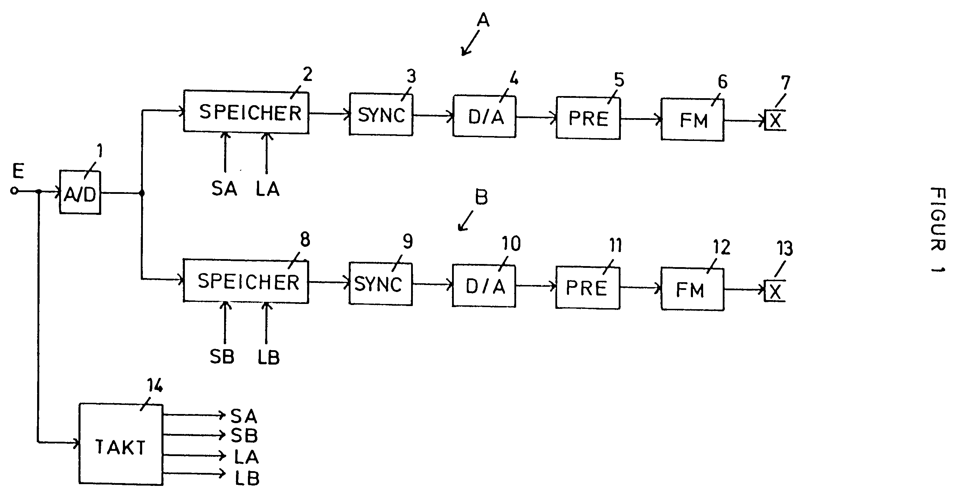

Die Figur 1 zeigt ein vereinfachtes Blockschaltbild zur Erläuterung der aufzeichnungsseitigen Signalverarbeitung. Dem Eingang E der Schaltung wird entweder ein analoges Fernsehsignal mit einer ersten Zeilenzahl beispielsweise 625, oder ein analoges Fernsehsignal mit einer zweiten Zeilenzahl, beispielsweise 1250, zugeführt. Die Bildwechselfrequenz dieses Signals ist in beiden Fällen 50 Hz. Dieses Signal wird in einem Analog/Digitalwandler 1 in ein Digitalsignal umgewandelt. Dieses Digitalsignal wird auf zwei Aufzeichnungskanäle A und B verteilt.

Jeder Aufzeichnungskanal enthält einen Speicher 2 bzw. 8, in welchem das Signal zeitexpandiert wird. Das zeitexpandierte Signal wird in einer Synchronsignal-Eintastschaltung 3 bzw. 9 mit einem Synchronsignal versehen. Das Ausgangssignal der Synchronsignal-Eintastschaltung wird in einem Digital/Analog-Wandler 4 bzw. 10 in ein analoges Signal rückumgewandelt, einer Preemphase 5 bzw. 11 und einer Frequenzmodulation 6 bzw. 12 unterworfen und schließlich mittels einer Magnetkopfeinheit 7 bzw. 13 auf ein nicht gezeichnetes Magnetband aufgezeichnet.

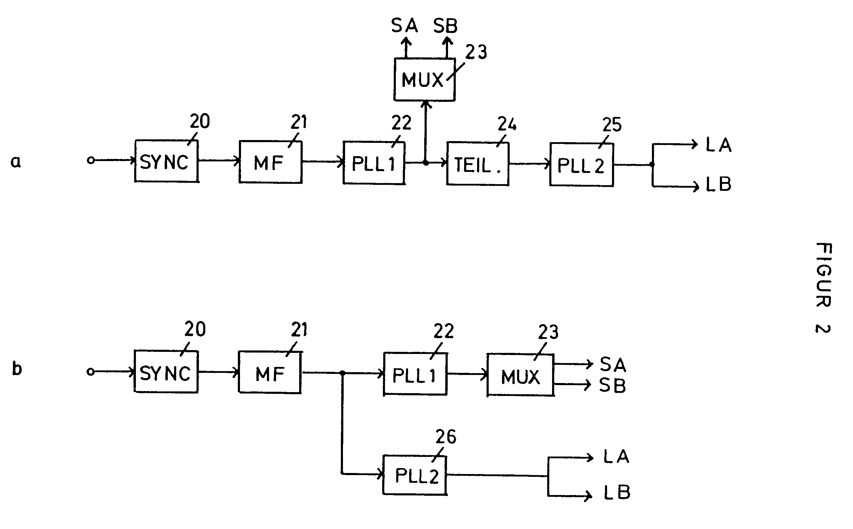

Die genannte Aufteilung des Signals auf die beiden Aufzeichnungskanäle A und B wird durch einen Taktgenerator 14 festgelegt, welchem das Eingangssignal der Schaltung zugeführt wird und welcher die Einschreibtaktsignale und die Auslesetaktsignale für die Speicher 2 und 8 erzeugt. Die Funktionsweise dieses Taktgenerators wird anhand zweier bevorzugter Auführungsformen anhand der Figuren 2a und 2b näher erläutert.

Dem in Figur 2a gezeigten Taktgenerator wird das am Eingang E der in der Figur 1 gezeigten Schaltung anliegende Fernsehsignal zugeführt. Aus diesem werden in einer Synchronsignaltrennstufe 20 die Synchronsignale abgetrennt. Diese werden einem Zeitfilter, beispielsweise einem Monoflop 21, zugeführt. Dieses Zeitfilter ist derart dimensioniert, daß im Falle eines 625-zeiligen Eingangssignals am Ausgang des Zeitfilters die Horizontalsynchronimpulse des 625-zeiligen Eingangssignals zur Verfügung stehen, also Horizontalsynchronimpulse mit einer Frequenz von 15,625 kHz, und im Falle eines 1250-zeiligen Eingangssignals jeder zweite Horizontalsynchronimpuls unterdrückt wird, so daß auch in diesem Falle am Ausgang des Zeitfilters Horizontalsynchronimpulse mit einer Frequenz von 15,625 kHz zur Verfügung stehen.

Diese Horizontalsynchronimpulse werden einer Phasenregelschleife 22 zur Erzeugung eines mit den Horizontalsynchronimpulsen synchronen Taktsignals zugeführt. Die den ungeradzahligen Zeilen des Eingangssignals zugeordneten Impulse des mit den Horizontalsynchronimpulsen synchronen Taktsignals, welche an einem ersten Ausgang eines an die Phasenregelschleife 22 angeschlossenen Multiplexers 23 erhalten werden, bilden ein Einschreibtaktsignal SA für den im ersten Aufzeichnungskanal A angeordneten Speicher 2. Die den geradzahligen Zeilen des Eingangssignals zugeordneten Impulse des mit den Horizontalsynchronimpulsen synchronen Taktsignals, welche an einem zweiten Ausgang des Multiplexers 23 erhalten werden, bilden ein Einschreibtaktsignal SB für den im zweiten Aufzeichnungskanal B angeordneten Speicher 8.

Ferner wird das Ausgangssignal der Phasenregelschleife 22 einem Frequenzteiler 24 zugeführt. Das frequenzgeteilte Signal gelangt an eine zweite Phasenregelschleife 25, deren Zeitkonstante so bemessen ist, daß stabile Auslesetaktsignale LA und LB für den im ersten bzw. zweiten Aufzeichnungskanal angeordneten Speicher 2 bzw. 8 erzeugt werden. Die Frequenz dieser Auslesetaktsignale ist etwas größer als die halbe Frequenz des obengenannten, mit den Horizontalsynchronimpulsen synchronen Taktsignals. Dadurch wird in den Speichern 2 bzw. 8 die gewünschte Zeitexpansion der Signale erzielt.

Der in Figur 2b gezeigte Taktgenerator unterscheidet sich von dem in Figur 2a gezeigten lediglich dadurch, daß die Phasenregelschleife 26 zur Erzeugung der Auslesetaktsignale ebenso wie die Phasenregelschleife 22 unmittelbar an den Ausgang des Zeitfilters 21 angeschlossen und damit parallel zur Phasenregelschleife 22 angeordnet ist. Auch die Zeitkonstante der Phasenregelschleife 26 muß so bemessen sein, daß stabile Auslesetaktsignale LA und LB für den im ersten bzw. zweiten Aufzeichnungskanal angeordneten Speicher 2 bzw. 8 erzeugt werden.

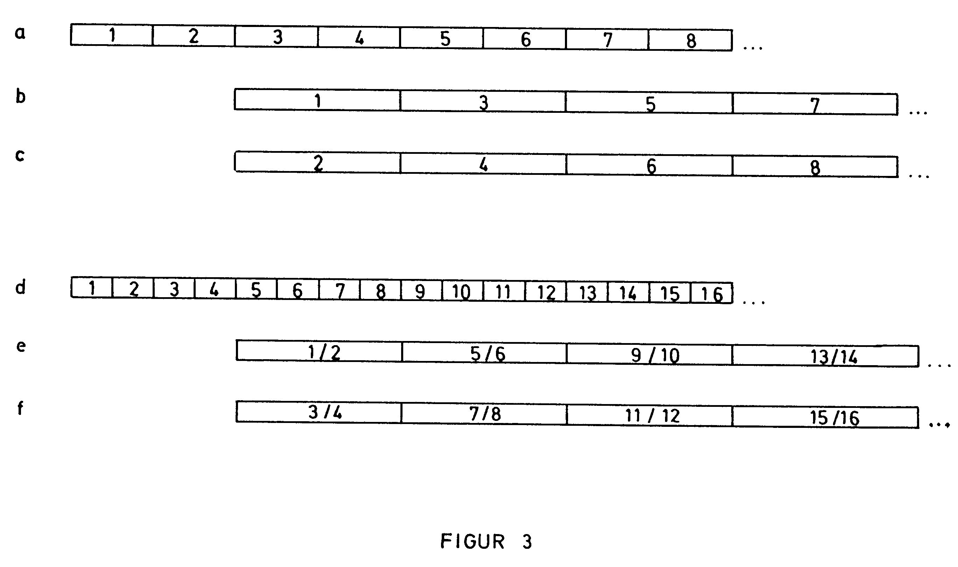

Im folgenden wird anhand von Figur 3 erläutert, wie die Aufteilung eines Signals mit 625 Zeilen auf die beiden Aufzeichnungskanäle erfolgt und wie die Aufteilung eines Signals mit 1250 Zeilen auf die beiden Aufzeichnungskanäle durchgeführt wird.

Die Figur 3a zeigt die aufeinanderfolgenden Zeilen 1-8 eines 625-zeiligen Eingangssignals. Die ungeradzahligen Zeilen dieses Signals werden - wie aus Figur 3b hervorgeht - in dem im Aufzeichnungskanal A angeordneten Speicher 2 zeitexpandiert und schließlich mittels der Magnetkopfeinheit 7 aufgezeichnet (siehe Fig. 1). Die geradzahligen Zeilen des Eingangssignals werden - wie aus der Figur 3c hervorgeht - in dem im Aufzeichnungskanal B angeordneten Speicher 8 zeitexpandiert und schließlich mittels der Magnetkopfeinheit 13 aufgezeichnet (siehe Fig. 1).

Die Figur 3d zeigt die aufeinanderfolgenden Zeilen 1-16 eines 1250-zeiligen Eingangssignals. Das erste Zeilenpaar dieses Signals wird - wie es aus Figur 3e hervorgeht - in dem im Aufzeichnungskanal A angeordneten Speicher 2 zeitexpandiert und schließlich mittels der Magnetkopfeinheit 7 aufgezeichnet (siehe Fig. 1). Das zweite Zeilenpaar, d.h. die dritte und vierte Zeile des Eingangssignals wird - wie aus Figur 3f hervorgeht - in dem im Aufzeichnungskanal B angeordneten Speicher 8 zeitexpandiert und schließlich mittels der Magnetkopfeinheit 13 aufgezeichnet (siehe Fig. 1).

Ein Vergleich der Figuren 3b und 3c mit den Figuren 3e und 3f zeigt, daß die am Ausgang der Speicher 2 und 8 erhaltenen Signaleinheiten beim Vorliegen eines 1250-zeiligen Eingangssignals die gleiche Zeitdauer haben wie beim Vorliegen des 625-zeiligen Eingangssignals, wodurch auf dem Magnetband das gleiche Aufzeichnungsmuster bzw. -schema entsteht.

Mittels des vorstehend beschriebenen Aufzeichnungssystems kann auch ein Signal aufgezeichnet werden, dessen Zeilenzahl geringer ist als eine der obengenannten Zeilenzahlen. Im vorliegenden Fall kann beispielsweise auch ein 1248-zeiliges, ein 1249-zeiliges oder ein 624-zeiliges Signals aufgezeichnet werden. Dabei bleibt am Ende eines Vollbildes eine der in der Figur 3b, c, e oder f gezeigten Signaleinheiten frei bzw. ohne Nutzsignal.

## Patentansprüche

1. Videorecorder zur Aufzeichnung von Videosignalen mit einer ersten Zeilenzahl, mit
- einer Einrichtung zur Aufteilung der einzelnen Zeilen auf mehrere Aufzeichnungskanäle,
- einer in jedem Aufzeichnungskanal vorgesehenen Speichereinheit zur Zeitexpansion der jedem Aufzeichnungskanal zugeführten Videosignale,
- einem Taktgenerator zur Erzeugung der Einschreib- und Auslesetaktsignale für die Speichereinheit aus den Horizontalsynchronimpulsen des Videosignals,
- einer in jedem Aufzeichnungskanal vorgesehenen Eintastschaltung für Synchronsignale,
- einem in jedem Aufzeichnungskanal vorgesehenen Frequenzmodulator, und
- einer in jedem Aufzeichnungskanal vorgesehenen Videokopfeinheit zur Aufzeichnung des frequenzmodulierten Signals,
**dadurch gekennzeichnet**,
daß zu einer Aufzeichnung von Videosignalen mit einer im Vergleich zur ersten Zeilenzahl erhöhten Zeilenzahl dem Taktgenerator (14) ein Zeitfilter (21) zugeordnet ist, an dessen Eingang Horizontalsynchronimpulse mit einer den Horizontalsynchronimpulsen des Videosignals erhöhter Zeilenzahl entsprechenden Frequenz anliegen und an dessen Ausgang Horizontalsynchronimpulse mit einer den Horizontalsynchronimpulsen des Videosignals mit der ersten Zeilenzahl entsprechenden Frequenz zur Verfügung gestellt werden, mittels derer der Taktgenerator (14) die Einschreib- und Auslesetaktsignale für die Speichereinheit (2,8) derart erzeugt, daß die jedem Aufzeichnungskanal zugeführten Videosignale zeitlich so expandiert werden, daß jeweils eine Anzahl von aufeinanderfolgenden Zeilen des Videosignals den Aufzeichnungskanälen zugeordnet wird, wobei die Anzahl der aufeinanderfolgenden Zeilen durch das Verhältnis der erhöhten Zeilenzahl zur ersten Zeilenzahl festgelegt ist.

2. Videorecorder nach Anspruch 1, **dadurch** **gekennzeichnet**, daß der Taktgenerator (14) eine an den Ausgang des Zeitfilters (21) angeschlossene erste Phasenregelschleife (22) zur Erzeugung des Einschreibtaktsignals, einen an den Ausgang der ersten Phasenregelschleife angeschlossenen Frequenzteiler (24) und eine an den Ausgang des Frequenzteilers angeschlossene zweite Phasenregelschleife (25) zur Erzeugung des Auslesetaktsignals aufweist.

3. Videorecorder nach Anspruch 1, **dadurch** **gekennzeichnet**, daß der Taktgenerator (14) eine an den Ausgang des Zeitfilters (21) angeschlossene erste Phasenregelschleife (22) zur Erzeugung des Einschreibtaktsignals und eine parallel dazu angeordnete zweite Phasenregelschleife (26) zur Erzeugung des Auslesetaktsignals aufweist.

## Claims

1. Video recorder for recording video signals having a first number of lines, having
- a device for splitting the individual lines between a plurality of recording channels,
- a memory unit, which is provided in each recording channel, for time expansion of the video signals supplied to each recording channel,
- a clock generator for producing write and read clock signals for the memory unit from the horizontal synchronization pulses of the video signal,
- a keying circuit, which is provided in each recording channel, for synchronization signals,
- a frequency modulator, which is provided in each recording channel, and
- a video head unit, which is provided in each recording channel, for recording the frequency-modulated signal,
characterized in that
a time filter (21) is assigned to the clock generator (14) in order to record video signals having a greater number of lines than the first number of lines, to the input of which time filter (21) horizontal synchronization pulses are applied at a frequency corresponding to the horizontal synchronization pulses of the video signal having an increased number of lines and at whose output horizontal synchronization pulses are available at a frequency corresponding to the horizontal synchronization pulses of the video signal having the first number of lines and by means of which pulses the clock generator (14) produces the write and read clock signals for the memory unit (2, 8) in such a manner that the video signals which are supplied to each recording channel are time-expanded such that a number of successive lines of the video signal are in each case assigned to the recording channels, the number of successive lines being defined by the ratio of the increased number of lines to the first number of lines.

2. Video recorder according to Claim 1, characterized in that the clock generator (14) has a first phase locked loop (22), which is connected to the output of the time filter (21), in order to produce the write clock signal, a frequency divider (24) which is connected to the output of the first phase locked loop, and a second phase locked loop (25), which is connected to the output of the frequency divider, in order to produce the read clock signal.

3. Video recorder according to Claim 1, characterized in that the clock generator (14) has a first phase locked loop (22) which is connected to the output of the time filter (21), for producing the write clock signal, and a second phase locked loop (26), which is arranged in parallel therewith, for producing the read clock signal.

## Revendications

1. Enregistreur vidéo servant pour l'enregistrement de signaux vidéo possédant un premier nombre de lignes, comportant
- un dispositif pour répartir les différentes lignes en plusieurs canaux d'enregistrement,
- une unité de mémoire prévue dans chaque canal d'enregistrement servant à réaliser une expansion temporelle des signaux vidéo envoyés à chaque canal d'enregistrement,
- un générateur de cadence servant à produire des signaux de cadence d'enregistrement et de lecture pour l'unité de mémoire à partir des impulsions de synchronisation horizontale du signal vidéo,
- un circuit de manipulation, prévu dans chaque canal d'enregistrement, pour des signaux de synchronisation,
- un modulateur de fréquence prévu dans chaque canal d'enregistrement, et
- une unité à tête vidéo prévue dans chaque canal d'enregistrement et prévue pour l'enregistrement du signal modulé en fréquence,
caractérisé par le fait que pour l'enregistrement de signaux vidéo possédant un nombre de lignes accru par rapport au premier nombre de lignes, au générateur de cadence (14) est associé un filtre temporel (21), à l'entrée duquel sont appliquées des impulsions de synchronisation horizontale possédant une fréquence qui correspond aux impulsions de synchronisation horizontale des signaux vidéo présentant le nombre de lignes accru et à la sortie duquel sont disponibles des impulsions de synchronisation horizontale possédant une fréquence qui correspond aux impulsions de synchronisation horizontale du signal vidéo possédant un premier nombre de lignes, et à l'aide desquelles le générateur de cadence (14) produit les signaux de cadence d'enregistrement et de lecture pour l'unité de mémoire (2, 8) de telle sorte que les signaux vidéo envoyés à chaque canal d'enregistrement sont expansés dans le temps au point que respectivement un nombre de lignes successives du signal vidéo sont associées aux canaux d'enregistrement, le nombre des lignes successives étant fixé par le rapport du nombre de lignes accru au premier nombre de lignes.

2. Enregistreur vidéo selon la revendication 1, caractérisé en ce que le générateur de cadence (14) comporte une première boucle de régulation de phase (22) qui est raccordée à la sortie du filtre temporel (22) et sert à produire le signal de cadence d'enregistrement, un diviseur de fréquence (24) raccordé à la sortie de la première boucle de régulation de phase, et une seconde boucle de régulation de phase (25), qui est raccordée à la sortie du diviseur de fréquence et sert à produire le signal de cadence de lecture.

3. Enregistreur vidéo selon la revendication 1, caractérisé en ce que le générateur de cadence (14) possède une première boucle de régulation de phase (22) raccordée à la sortie du filtre temporel (21) et servant à produire le signal de cadence d'enregistrement, et une seconde boucle de régulation de phase (26) disposée en parallèle avec la première et servant à produire le signal de cadence de lecture.
